# EUROPÄISCHE PATENTSCHRIFT

(11) **EP 2 704 893 B1**
(45) Veröffentlichungstag und Bekanntmachung des Hinweises auf die Patenterteilung: **09.09.2015**
(21) Anmeldenummer: 12728373.7
(22) Anmeldetag: 24.04.2012
(51) Int. Cl.: B29C 51/10, A42B 3/12, A42C 2/00

(54) **POLSTERLAGENANORDNUNG FÜR EIN KÖRPERSCHUTZPOLSTER UND VERFAHREN ZU DEREN HERSTELLUNG**
PADDED LAYER ARRANGEMENT FOR PADDED BODY PROTECTION AND METHOD FOR THE PRODUCTION THEREOF
ENSEMBLE DE COUCHES DE REMBOURRAGE POUR REMBOURRAGE DE PROTECTION CORPORELLE ET PROCÉDÉ DE FABRICATION DE CET ENSEMBLE

(30) Priorität: 05.05.2011 DE 102011100642
(43) Veröffentlichungstag der Anmeldung: 12.03.2014
(73) Patentinhaber: OPED AG, 6330 Cham (CH)
(72) Erfinder: BOTSCH, Julian, 83730 Fischbachau (DE)
(74) Vertreter: advotec.
(86) Internationale Anmeldenummer: PCT/DE2012/000418
(87) Internationale Veröffentlichungsnummer: WO 2012/149923

(56) Entgegenhaltungen:
- US-A- 4 023 213
- US-A- 4 345 338

## Beschreibung

Die Erfindung betrifft ein Verfahren zur Herstellung einer Polsterlagenanordnung für ein Körperschutzpolster nach Anspruch 1 sowie eine Polsterlagenanordnung nach Anspruch 8.

Polsterlagenanordnungen der eingangsgenannten Art werden zur Herstellung von Körperschutzpolstern verwendet, die beispielsweise in Schutzhelmen oder in Sportfunktionsbekleidung integriert sind. Die Schutzfunktion basiert dabei im Wesentlichen auf einer Absorption von Schlägen oder Stößen durch die in Hohlkörpern der Polsterlagenanordnung ausgebildeten Formkörperfüllungen.

Die Veröffentlichung US 4,023,213 A offenbart ein Körperschutzpolster mit einer Mehrzahl von Hohlkörpern, welche durch eine Basislage mit taschenförmigen Ausstülpungen und einer auf der Basislage aufgeschweißten Decklage gebildet werden. Die Hohlkörper sind hierbei mit elastischen Formkörpern ausgefüllt.

Zur Erzielung eines bestmöglichen Absorptionsvermögens wird eine möglichst hohe Packungsdichte der Formkörper im Formkörperverbund angestrebt. Dies kann unter anderem dadurch erreicht werden, dass die Hohlkörper mittels einer Evakuierungseinrichtung evakuiert werden und somit mittels des Vakuums ein dichter Verbund entsteht. Zugleich entsteht hierbei eine Formstabilität, so dass nach der Evakuierung das Schutzelement unabhängig von der Formstabilität der Kunststoffhülle eine weitgehend fixierte Form aufweist.

Die vakuumabhängige Wirkung setzt voraus, dass entweder zur temporären Evakuierung geeignete Ventileinrichtungen an der Polsterlagenanordnung ausgebildet sein müssen, oder bei permanenter Evakuierung die Polsterlagenanordnung entsprechend aufwändig ausgebildet ist, um die Aufrechterhaltung des Vakuums über die Lebensdauer der Polsterlagenanordnung zu gewährleisten.

Aufgabe der vorliegenden Erfindung ist es daher, eine Polsterlagenanordnung für ein Körperschutzelement zur Verfügung zu stellen, welche sowohl einfach in der Handhabung als auch einfach in der Herstellung ist.

Die vorliegende Aufgabe wird durch ein Verfahren mit den Merkmalen des Anspruchs 1 sowie eine Polsterlagenanordnung mit den Merkmalen des Anspruchs 8 gelöst.

Bei dem erfindungsgemäßen Verfahren erfolgt zunächst die Ausbildung einer Mehrzahl von taschenförmigen Ausstülpungen in der Basislage. Hierbei ist es unerheblich, ob die Basislage zunächst eine komplett ebene und in sich steife Schicht ist oder als flexible schlaffe Struktur vorliegt. Zumindest erfolgt im ersten Schritt die entsprechende Umformung zur Bildung der Ausstülpungen.

Zur Befüllung der taschenförmigen Ausstülpungen werden die elastischen Formkörper in loser Schüttung eingefüllt. Die Formkörper sind zumindest elastisch oder teilelastisch, elastisch-plastisch, verformbar.

Beispielsweise können Kunststoffkugeln aus Polystyrol oder einem vergleichbaren Material eingesetzt werden.

Anschließend wird auf der Basislage eine Decklage aufgebracht. Hierbei überdeckt die Decklage im Bereich von Einfüllöffnungen, welche zuvor durch die Bildung der taschenförmigen Ausstülpungen entstanden sind, die Formkörperfüllungen und die Einfüllöffnungen umgebend die Basislage.

Nachfolgend erfolgen eine Temperaturbeaufschlagung der auf der Basislage angeordneten Decklage sowie eine Beaufschlagung der Hohlräume mit einem Vakuum. Das in den Hohlräumen ausgebildete Vakuum führt zu einer Verdichtung der in den Hohlräumen vorhandenen losen Schüttung von Formkörpern. Hierdurch reduziert sich der von der Formkörperfüllung eingenommene Raum. Zugleich mit der Verdichtung der Formkörperfüllung erfolgt ein Tiefziehen der Decklage auf die Formkörperfüllung. Entsprechend der Verformung der Decklage entstehen in die Ausstülpung hineinragende Vorsprünge. Insofern bilden sich zu den taschenförmigen Ausstülpungen jeweils in reduzierter Form in gleicher Richtung geformte Vorsprünge. Weiterhin wird zugleich oder nachfolgend eine Fügeverbindung in einer am oberen Rand der taschenförmigen Ausstülpung zwischen der Basislage und der Decklage ausgebildeten Verbindungszone geschaffen. Hierbei entsteht eine feste Verbindung zwischen der Basislage und der Decklage. Die Fügeverbindung kann je nach Ausbildung gasdicht ausgebildet sein.

Das erfindungsgemäße Verfahren ermöglicht in besonders einfacher und wirtschaftlicher Weise die Herstellung einer Polsterlagenanordnung, welche die vorteilhaften stoßabsorbierenden Eigenschaften aufweist, ohne dass es der Ausbildung des Vakuums in den Hohlkörpern bedarf. Die Erzeugung eines Vakuums ist lediglich während des Herstellungsprozesses notwendig, um durch die Verkleinerung des Hohlkörperinnenraums eine hohe Packungsdichte der Formkörperfüllung oder gar eine elastische Vorspannung der Formkörperfüllung zu erreichen.

Hinsichtlich der Verbindung von der Decklage an die Basislage in der Verbindungszone ist die genaue Ausführung der Fügeverbindung zunächst unerheblich. In einer besonders vorteilhaften Ausführungsform wird die Fügeverbindung jedoch mittels eines umlaufenden Verschweißens der Basislage mit der Decklage erzeugt, wobei eine im Wesentlichen gasdichte Verbindung zwischen Basislage und Decklage geschaffen wird.

Besonders vorteilhaft ist es, wenn zur Ausbildung der taschenförmigen Ausstülpungen die Basislage zunächst auf einer Formplatte mit taschenförmigen Formnestern aufgelegt wird. Hierbei kann die Basislage sowohl ein in sich steifes als auch labiles Element sein. Zumindest wird die auf Verformungstemperatur aufgeheizte Basislage durch ein in den Formnestern anliegendes Vakuum in diese herabgezogen. Hierbei ist es zunächst unerheblich, wie die Verformungstemperatur erzeugt wird. Zum einen ist es möglich, die Basislage vorab extern zu beheizen und in erhöhter Temperatur aufzulegen. Vorteilhaft ist es jedoch, die Basislage nach dem Auflegen auf der Formplatte zu erwärmen. Dies kann vorausgehend vor dem Anlegen oder zugleich mit dem Anlegen des Vakuums erfolgen. Die Erwärmung kann hierbei sowohl mittels einer Kontaktheizung als auch vermittels einer Strahlungsheizung erfolgen.

Besonders vorteilhaft ist es, wenn die Basislage gasdicht ausgeführt ist. Insofern kann diese als Kunststofffolie ausgeführt sein. Hierdurch wird in einfacher Weise das Anlegen des Vakuums in den Formnestern ermöglicht, ohne dass es zwingend weiterer Hilfsmittel bedarf.

Alternativ ist es ebenso denkbar, als Basislage eine zunächst nicht gasdichte Schicht, beispielsweise eine textile Kunststoffstruktur, zu verwenden. Zur Ermöglichung einer Umformung mittels eines Vakuums kann hierzu die Basislage mit einer gasdichten weiteren Lage überdeckt werden. Es ist offensichtlich, dass die weitere Lage in diesem Fall die notwendige thermische Stabilität zur Umformung der Basislage sowie die notwendige Verformbarkeit zur Formgebung der taschenförmigen Ausstülpungen aufweisen muss.

Ergänzend oder alternativ zum Einsatz eines Vakuums zur Formung der taschenförmigen Ausstülpungen aus der Basislage besteht ebenso die Möglichkeit, auf der Oberseite der Basislage, d.h. beim Einsatz eines Vakuums auf der dem Vakuum gegenüberliegenden Seite der Basislage, einen Überdruck zu erzeugen. Hierbei kann in einfacher Weise Druckluft eingesetzt werden, welches in der Regel als Hilfsmittels in einer Produktionsstätte leichter verfügbar ist, als ein zu erzeugendes Vakuum. Es versteht sich, dass es einer im Wesentlichen abschließenden Hülle oberhalb der Basislage bedarf, damit der vorteilhafte Überdruck aufgebaut werden kann. Nicht erforderlich ist eine vollständige Gasdichtheit. Somit kann beispielsweise ein oberseitiges Werkzeug zur Aufheizung der Basislage derart ausgeführt werden, dass ein Überdruck zwischen diesem Werkzeug und der Basislage oberhalb der Formnester entstehen kann. Die notwendige Umformung der Basislage entsteht aufgrund der Druckdifferenz zwischen dem Druck oberhalb der Basislage und dem Druck in den Formnestern unterhalb der Basislage. Entsprechend führt der Einsatz eines Vakuums in den Formnestern zu einer gleich wirkenden Umformung, wie der Einsatz eines Überdrucks oberhalb der Basislage.

Bei der Verwendung einer nicht gasdichten Basislage eignet sich jedoch besonders die Verformung mittels eines Stempelwerkzeuges, wobei die Basislage durch einen aufgeheizten Formstempel in die entsprechenden Formnester herabgepresst wird.

Besonders vorteilhaft ist es, wenn zur Ausbildung der in die Ausstülpung hineinragenden Vorsprünge der Decklage die durch Abdeckung der Basislage mit der Decklage definierten Hohlräume durch eine in einer Bodenwandung der Ausstülpung ausgebildete Bodenöffnung mit Vakuum beaufschlagt werden.

Welcher Art die Bodenöffnung ist, ist zunächst unerheblich. Im Falle einer nicht gasdichten Basislage ist diese Bodenöffnung direkt durch die fehlende Gasdichtheit gegeben.

Bei der Verwendung einer gasdichten Basislage erfolgt in besonders vorteilhafter Weise die Bildung der Bodenöffnung durch eine Perforierung der im Formnestboden anliegenden Bodenwandung. Hierbei wird in besonders vorteilhafter Weise ein in die Entlüftungsöffnung der Formplatte eingeführtes Werkzeug verwendet. Insofern erfolgt von der Seite der Formplatte durch die Entlüftungsöffnung die Perforierung der Basislage unter Erzeugung der Bodenöffnung.

Unwesentlich ist es hierbei, ob die Erzeugung der Perforierung bei anliegendem Unterdruck in der Entlüftungsöffnung erfolgt oder ob zunächst die Perforierung durchgeführt wird und nachfolgend der Unterdruck angelegt wird. Zumindest wird in vorteilhafter Weise das Werkzeug zur Perforierung in die Entlüftungsöffnung eingeführt.

Zur Erzeugung der in die Ausstülpung hereinragenden Vorsprünge mittels eines Vakuums bedarf es eines gasdichten Abschlusses auf der Oberseite. Dies wird in besonders vorteilhafter Weise durch eine gasdichte Decklage realisiert. Insofern kann die Decklage gleichfalls als reguläre kostengünstige thermoplastische Kunststofffolie gewählt werden.

Alternativ ist es möglich, die Decklage gleichfalls als thermoplastisch verformbare Schicht zu wählen, die jedoch nicht gasdicht ausgeführt ist. Zur Erzeugung der notwendigen Gasdichtheit wird zum Zweck der Vakuumbeaufschlagung vorteilhaft die Decklage rückwärtig durch eine weitere gasdichte Lage abgedeckt. Hierbei bedarf es der notwendigen Flexibilität der weiteren gasdichten Lage, zur Ermöglichung der Verformung ausgehend von der unverformten Decklage zu der Bildung der hineinragenden Vorsprünge.

In vorteilhafter Weise erfolgt die Temperaturbeaufschlagung der Decklage bzw. der die Decklage abdeckenden Lage mittels einer Kontaktheizung. Hierbei kann die Decklage in einer ersten Ausführungsvariante auf ein ebenes beheiztes Werkzeug aufgelegt sein. Nach dem Erweichen können mittels des Vakuums die Vorsprünge gebildet werden. Gleichfalls ist es möglich, die zur Erwärmung der Decklage gewählte Werkzeugform der Ausbildung der Vorsprünge anzupassen. Insofern erfolgt zunächst eine Erwärmung derjenigen Bereiche der Decklage, die primär verformt werden. Hierbei kann in vorteilhafter Weise die Erwärmung fortwährend mit der Umformung der Decklage durchgeführt werden.

Alternativ zur Kontaktheizung kann die Temperaturbeaufschlagung der Decklage bzw. der die Decklage abdeckenden gasdichten Lage in besonders vorteilhafter Weise vermittels einer Strahlungsheizung erfolgen. Durch die Verwendung einer Strahlungsheizung bedarf es nicht der Herstellung eines weiteren Formwerkzeugs. Weiterhin ist die Ausführungsform von besonderem Vorteil, da während des Verformungsvorgangs, ausgelöst durch das Vakuum, unvermindert die Erhitzung der Decklage mittels der Strahlungsheizung stattfinden kann. Hierbei kann die Strahlungsheizung in einfachster Ausführungsart eine gleichmäßige Bestrahlung der gesamten Oberfläche der Decklage durchführen. Besonders vorteilhaft ist es jedoch, wenn die Strahlungsheizung entsprechend der Formgebung und Verteilung der Ausstülpungen und somit der zu erzeugenden Vorsprünge eine unterschiedlich verteilte Strahlungsenergie aufbringt. Insofern können besonders die zu verformenden Bereiche erwärmt werden, während hingegen nicht zu verformende Bereiche einer geringeren Temperaturbelastung unterliegen.

Weiterhin ist es vorteilhaft, wenn vor oder nach, besonders vorteilhaft während des Anlegens des Vakuums ein derartiges Werkzeug eingesetzt wird, dass zugleich die Fügeverbindung zwischen Basislage und Decklage in der Verbindungszone in dem oberen, die taschenförmigen Ausstülpungen umgebenden Rand erzeugt. Diesbezüglich ist es vorteilhaft, wenn das Mittel zur Erzeugung der Erwärmung der Decklage zugleich eingesetzt werden kann zur Erzeugung der Fügeverbindung.

Die erfindungsgemäße Polsterlagenanordnung weist die Merkmale des Anspruchs 8 auf.

Erfindungsgemäß weist die Polsterlagenanordnung eine Mehrzahl von Hohlkörpern auf, die zwischen einer thermoplastisch verformbaren Basislage und einer thermoplastisch verformbaren Decklage in einem Lagenverbund ausgebildet sind und eine Körperhülle aufweisen, die durch einen Basislagenbereich und einen Decklagenbereich gebildet ist, die über eine Fügeverbindung in einer in der Ebene des Lagenverbunds umlaufenden Verbindungszone miteinander verbunden sind, die einen oberen Rand einer taschenförmigen Ausstülpung des Basislagenbereichs bildet, wobei die Körperhülle eine Formkörperfüllung aus einer Mehrzahl von elastischen Formkörpern aufweist und zur Verdichtung der Formkörperfüllung im Decklagenbereich ein in die Ausstülpung hineinragender Vorsprung ausgebildet ist.

Grundsätzlich ist eine Mehrzahl von Hohlkörpern vorgesehen, die zwischen einer thermoplastisch verformbaren Basislage und einer thermoplastisch verformbaren Decklage in einem Lagenverbund ausgebildet sind. Wenngleich die Polsterlagenanordnung zur Erzielung der erfindungsgemäßen Vorteile ebenso lediglich einen einzelnen Hohlkörper aufweisen könnte, wird eine Ausführung mit einer Mehrzahl von Hohlkörpern bevorzugt.

Ein wesentliches Merkmal der erfindungsgemäßen Polsterlagenanordnung ist es, dass zur Verdichtung der Formkörperfüllung bzw. der losen Schüttung an elastischen Formkörpern der Decklagenbereich als ein in die Ausstülpung hineinragender Vorsprung ausgebildet ist.

Die erfindungsgemäße Polsterlagenanordnung zeichnet sich insbesondere durch die besonders einfache Herstellung aus, bei welcher in gleicher

Richtung zu den Ausstülpungen die Vorsprünge ausgebildet sind. Durch diese Ausführungsform kann eine besonders dichte Packung der Formkörper erreicht werden und somit wird ein optimales Schutzniveau erreicht, ohne dass es, wie aus dem Stand der Technik üblich, eines weiteren Anlegens eines zusätzlichen Vakuums bedarf.

Weiterhin eignet sich die Polsterlagenanordnung zur Verwendung in verschiedensten Anwendungsgebieten. Somit kann die Polsterlagenanordnung für verschiedenste Verwendungszwecke, beispielsweise zum Körperschutz, als auch zum Transportschutz von Gegenständen, Verwendung finden. Ebenso ist es möglich, die Polsterlagenanordnung aufgrund der thermoplastisch verformbaren Basis- und Decklage mittels nachfolgender Prozessschritte diese für eine individuelle Verwendung nochmals im Bereich außerhalb der Hohlkörper zu verformen.

Besonders vorteilhaft ist es, wenn die Körperhülle eine Öffnung aufweist. In vorteilhafter Weise ist hierbei die Öffnung als Bodenöffnung in einer Bodenwandung der taschenförmigen Ausstülpung ausgebildet. Es ist offensichtlich, dass somit in der Verwendung der Polsterlagenanordnung im Hohlkörper kein Vakuum anliegt. Dennoch weist die Polsterlagenanordnung die besonders vorteilhafte dichte Packung auf, welche zur Erzielung eines hohen Schutzniveaus notwendig ist. Jedoch wird aufgrund des fehlenden Vakuums eine manuelle Rückformung nach einer Verformung durch eine stoßartige Belastung ermöglicht. Hingegen bedarf es im Stand der Technik eines Entfernens des Vakuums und nach dem Rückformen einer neuen Erzeugung eines Vakuums.

In einer vorteilhaften Ausführungsform werden die Basislage und/oder die Decklage aus einem thermoplastischen Material mit textiler Struktur gebildet. Insofern kann für die Polsterlagenanordnung die Materialwahl anhand der späteren Verwendung ausgelegt werden. Dies erspart mitunter die Aufbringung einer zusätzlichen kaschierenden Oberschicht.

Vorteilhaft ist es des Weiteren, wenn die Basislage und/oder die Decklage mit zumindest einer weiteren Decklage versehen sind. Somit kann die Polsterlagenanordnung als fertiges Bauteil für die individuelle Verwendung mit den notwendigen Oberflächeneigenschaften versehen werden.

Das erfindungsgemäße Körperschutzpolster weist eine Polsterlagenanordnung nach einem oder mehreren der Ansprüche 8 bis 12 auf.

In den nachfolgenden Figuren wird beispielhaft eine Ausführungsform einer erfindungsgemäßen Polsterlagenanordnung, deren Herstellungsverfahren sowie ein Verwendungsbeispiel skizziert.

Es zeigen:
- **Fig. 1**: ein Ausführungsbeispiel einer Polsterlagenanordnung;
- **Fig. 2**: einen in der Polsterlagenanordnung ausgebildeten Hohlkörper;
- **Fig. 3 bis Fig. 8**: eine Möglichkeit der Herstellung der Polsterlagenanordnung mit Darstellung einzelner Verfahrensstadien;
- **Fig. 9**: eine Applikation der Polsterlagenanordnung an einem Schutzhelm.

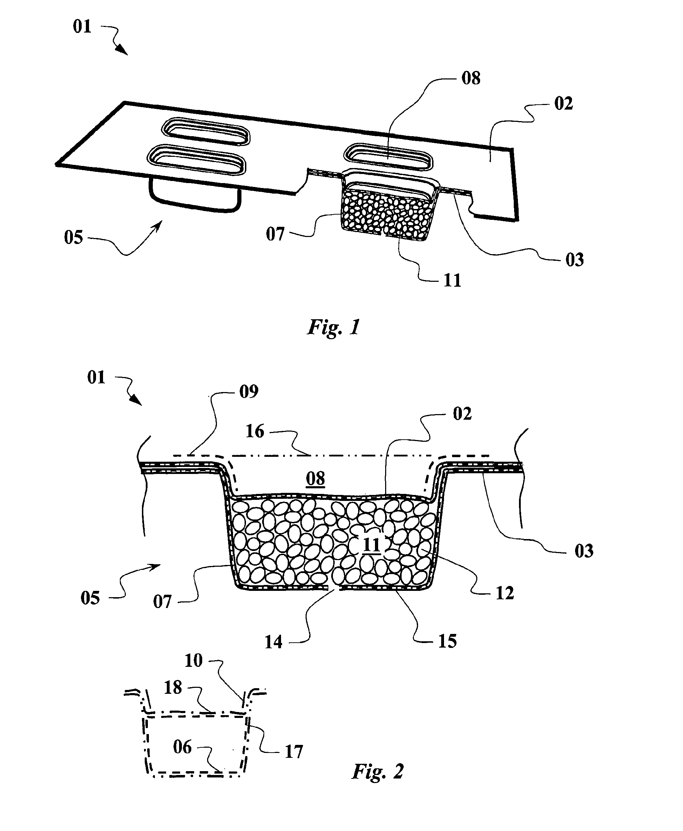

**Fig. 1** zeigt eine Polsterlagenanordnung 01 mit einer Basislage 03 und einer Decklage 02, zwischen denen eine Mehrzahl von Hohlkörpern 05 ausgebildet ist, welche jeweils von einem Basislagenbereich 17 und einem Decklagenbereich 18 gebildet sind (schematisch in Fig. 2 zu erkennen), die in einer Verbindungszone 09 miteinander verbunden sind. In dem Decklagenbereich 18 ist ein Vorsprung 08 ausgebildet, der in eine taschenförmige Ausstülpung 07 des Basislagenbereichs 17 hineinragt. Innerhalb des Hohlkörpers 05 befindet sich eine Formkörperfüllung 11.

Wie insbesondere **Fig. 2** zeigt, sind die taschenförmige Ausstülpung 07 sowie der in diese hineinragende Vorsprungs 08 gleichgerichtet ausgebildet und bilden eine Körperhülle 06 (schematisch skizziert) für die Formkörperfüllung 11 aus. Innerhalb der Verbindungszone 09 ist eine Fügeverbindung ausgebildet, welche den festen Verbund zwischen der Basislage 03 und der Decklage 02 sicherstellt und somit die Körperhülle 06 stabilisiert. Die Formkörperfüllung 11 weist eine Vielzahl von Formkörpern 12 auf, die unter Vorspannung, welche durch die Körperhülle 06 auf die Formkörperfüllung 11 ausgeübt wird, dicht gepackt aneinander anliegen.

Im Bereich einer Bodenwandung 15 der taschenförmigen Ausstülpung 07 ist eine Bodenöffnung 14 angeordnet, die bei der fertig gestellten Polsterlagenanordnung 01 eine Belüftung der Hohlkörper 05 und - wie nachfolgend noch erläutert wird - eine Entlüftung der Hohlkörper bei der Herstellung der Polsterlagenanordnung 01 ermöglicht.

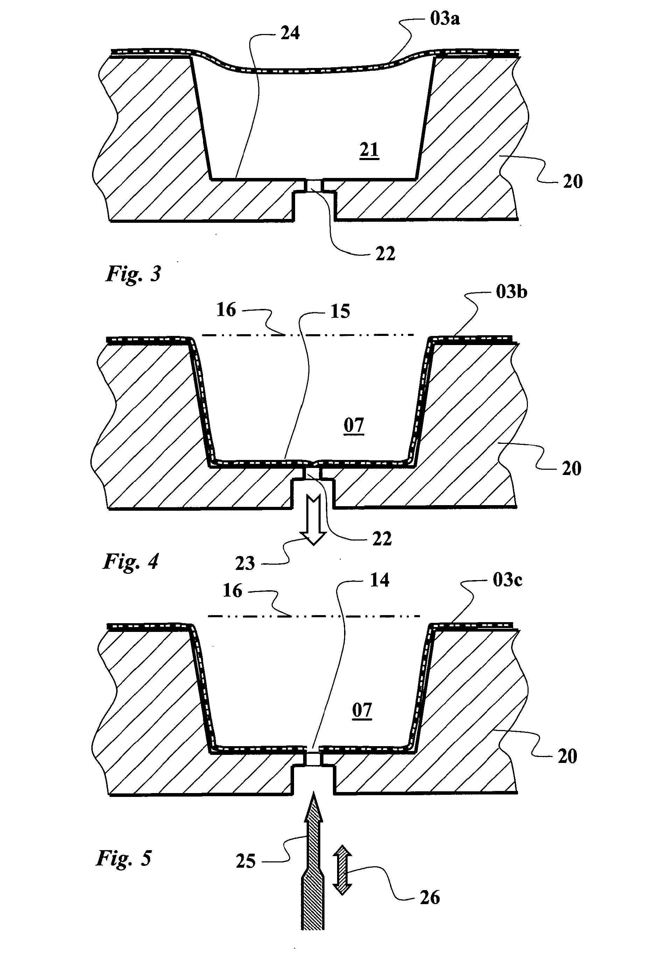

In den **Fig. 3 bis 8** wird anhand der Darstellung aufeinanderfolgender Verfahrensstadien die Herstellung der in **Fig. 1** dargestellten Polsterlagenanordnung 01 näher erläutert. Hierbei zeigt **Figur 3** einen Basislagenbereich 17 der Basislage 03, die auf einer Formplatte 20 mit einem Formnest 21 angeordnet ist. Das Formnest 21 ist in einem Formnestboden 24 mit einer Entlüftungsöffnung 22 versehen.

Unter Einwirkung einer erhöhten Temperatur sowie mittels des Anlegens eines Vakuums 23 an der Entlüftungsöffnung 22 erfolgt, wie in **Fig. 4** dargestellt, ein Tiefziehen der Basislage 03 in das Formnest 21, derart, dass die taschenförmige Ausstülpung 07 ausgebildet wird und die Basislage 03 mit einer Bodenwandung 15 der taschenförmigen Ausstülpung 07 auf dem Formnestboden 24 aufliegt. Mit Ausbildung der Ausstülpung 07 wird in der Basislage 03 eine Einfüllöffnung 16 ausgebildet.

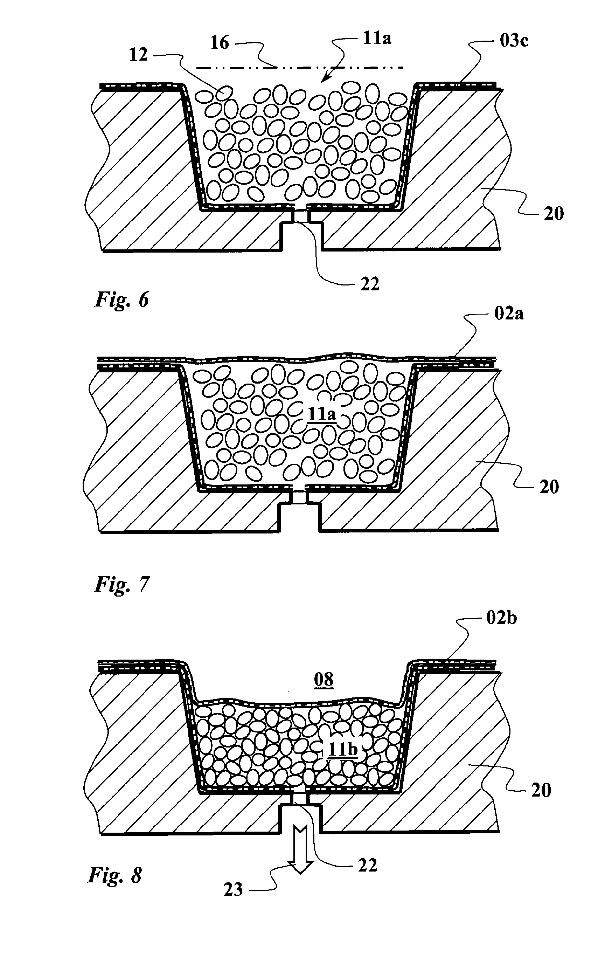

Nachfolgend wird, wie **Figur 5** zeigt, mittels eines Dorns 25 die Bodenöffnung 14 in der Bodenwandung 15 ausgebildet, und die Ausstülpung 07 wird über die Einfüllöffnung 16 im Basislagenbereich 17 mit Formkörpern 12 befüllt, die in loser Schüttung in die Ausstülpung 07 eingegeben werden (**Figur 6**).

Nach Befüllung der Ausstülpung 07 wird, wie in **Figur 7** dargestellt, die Decklage 02 mit dem Decklagenbereich 18 auf die Basislage 03 bzw. den Basislagenbereich 17 aufgelegt und mittels einer hier nicht näher dargestellten Beheizungseinrichtung auf Verformungstemperatur erwärmt.

Durch Anlegen eines Unterdrucks 23 an der Entlüftungsöffnung 22 wird, wie in **Figur 8** dargestellt, der auf Verformungstemperatur erwärmte Decklagenbereich 18 der Decklage 02 sowohl gegen einen Öffnungsrand 10 der Einfüllöffnung 16 als auch gegen die in der Ausstülpung 07 aufgenommene Formkörperfüllung 11 gezogen. Hierbei schmiegt sich der Decklagenbereich 18 unter Ausbildung einer Fügeverbindung in der Verbindungszone 09 an den Öffnungsrand 10 und die Formkörperfüllung 11 an, wobei unter Ausbildung des Vorsprung 08 im Decklagenbereich eine Verdichtung der Formkörperfüllung 11 erfolgt.

Ergebnis des Verfahrens ist die in **Fig. 1** dargestellte Polsteranlagenanordnung 01 mit dem in die taschenförmige Ausstülpung 07 hineinragenden Vorsprung 08.

Nachfolgend der Herstellung der Polsterlagenanordnung kann in einem weiteren Umformungsvorgang die Polsterlagenanordnung zur Erzeugung einer gewünschten formhaltigen Kontur, also beispielsweise einer schalenförmigen Kontur, umgeformt werden.

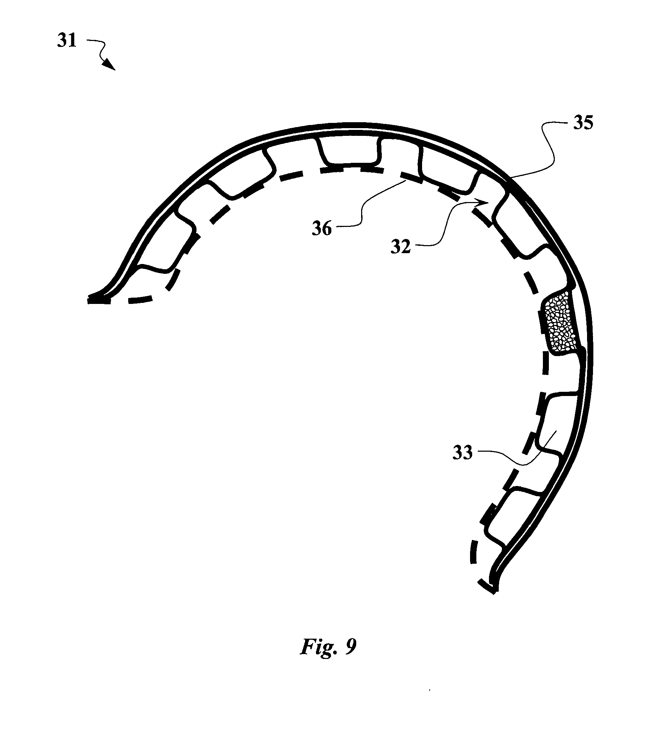

Als ein Beispiel einer möglichen Applikation der Polsterlagenanordnung ist in **Fig. 9** ein Schutzhelm 31 in einer Schnittansicht dargestellt, bei dem eine Polsterlagenanordnung 32 mit Hohlkörpern 33 zwischen einer Außenschale 35 und einem Innenbezug 36 angeordnet ist. Wenngleich es denkbar wäre, eine Polsterlagenanordnung 32 mit vorwiegend labiler Struktur bzw. mit einer flexibel biegbaren Basis- und Decklage zu verwenden und die gewünschte Kontur der Polsterlagenanordnung erst durch Anordnung auf der Innenseite der Außenschale zu erreichen, ist es für diese beispielhafte Ausführungsform vorteilhaft, wenn Deck- und Basislage in dem die Hohlkörper umgebenden Bereich nach der Herstellung der Polsterlagenanordnung 32 nochmals thermisch umgeformt werden und somit eine optimale Anpassung der Polsterlagenanordnung 32 an die Außenschale 35 erfolgt.

## Patentansprüche

1. Verfahren zur Herstellung einer Polsterlagenanordnung (01) für ein Körperschutzpolster mit einer Mehrzahl von Hohlkörpern (05), die zwischen einer thermoplastisch verformbaren Basislage (03) und einer thermoplastisch verformbaren Decklage (02) in einem Lagenverbund ausgebildet sind, mit den Verfahrensschritten:
a) Ausbildung einer Mehrzahl von taschenförmigen Ausstülpungen (07) in der Basislage, insbesondere mittels Vakuum und/oder Überdruck;
b) Befüllung der taschenförmigen Ausstülpungen der Basislage mit elastischen Formkörpern (12) zur Ausbildung einer Formkörperfüllung (11);
c) Anordnung der Decklage auf der Basislage, derart, dass zur Ausbildung von Hohlräumen Einfüllöffnungen (16) der taschenförmigen Ausstülpungen durch die Decklage abgedeckt sind;
d) Temperaturbeaufschlagung der auf der Basislage angeordneten Decklage und Beaufschlagung der Hohlräume mit einem Vakuum (23) zur Ausbildung von in die Ausstülpung hineinragenden Vorsprüngen (08) in der Decklage mit gleichzeitiger Verdichtung der in den Hohlräumen angeordneten Formkörperfüllung und Ausbildung einer Fügeverbindung in einer am Öffnungsrand (10) der taschenförmigen Ausstülpung zwischen der Basislage und der Decklage ausgebildeten Verbindungszone (09).

2. Verfahren nach Anspruch 1,
**dadurch gekennzeichnet,**
**dass** zur Ausbildung der taschenförmigen Ausstülpungen (07) die Basislage (03) auf einer Formplatte (20) mit taschenförmigen Formnestern (21) angeordnet wird und nachfolgend die durch die auf Verformungstemperatur aufgeheizte Basislage abgedeckten Formnester mit einem Vakuum (23) und/oder oberseitig der aufgeheizten Basislage mit einem Überdruck beaufschlagt werden.

3. Verfahren nach Anspruch 2,
**dadurch gekennzeichnet,**
**dass** zur Ausbildung der in die Ausstülpung (07) hineinragenden Vorsprünge (08) der Decklage (02) die durch Abdeckung der Basislage (03) mit der Decklage definierten Hohlräume durch eine in einer Bodenwandung (15) der Ausstülpung ausgebildete Bodenöffnung (14) mit Vakuum (23) beaufschlagt werden.

4. Verfahren nach Anspruch 3,
**dadurch gekennzeichnet,**
**dass** zur Ausbildung der Bodenöffnung (14) eine Perforierung der gegen einen Formnestboden (24) anliegenden Bodenwandung (15) mittels eines in eine Entlüftungsöffnung (22) der Formplatte eingeführten Werkzeugs erfolgt.

5. Verfahren nach einem der vorangehenden Ansprüche,
**dadurch gekennzeichnet,**
**dass** die Decklage (02) während der Vakuumbeaufschlagung rückwärtig durch eine gasdichte Lage abgedeckt wird.

6. Verfahren nach einem der vorangehenden Ansprüche,
**dadurch gekennzeichnet,**
**dass** die Temperaturbeaufschlagung der Decklage (02) bzw. der die Decklage abdeckenden Lage mittels einer Kontaktheizung erfolgt.

7. Verfahren nach einem der Ansprüche 1 bis 5,
**dadurch gekennzeichnet,**
**dass** die Temperaturbeaufschlagung der Decklage (02) bzw. der die Decklage abdeckenden gasdichten Lage vermittels einer Strahlungsheizung erfolgt.

8. Polsterlagenanordnung (01) für ein Körperschutzpolster mit einer Mehrzahl von Hohlkörpern (05), die zwischen einer thermoplastisch verformbaren Basislage (03) und einer thermoplastisch verformbaren Decklage (02) in einem Lagenverbund ausgebildet sind und eine Körperhülle (06) aufweisen, und wobei die Körperhülle (06) durch einen Basislagenbereich (17) und einen Decklagenbereich (18) gebildet ist, und wobei die Basislage und die Decklage über eine Fügeverbindung in einer in der Ebene des Lagenverbunds umlaufenden Verbindungszone (09) miteinander verbunden sind, und wobei die Fügeverbindung einen oberen Rand einer taschenförmigen Ausstülpung (07) des Basislagenbereichs bildet, und wobei die Körperhülle eine Formkörperfüllung (11) aus einer Mehrzahl von elastischen Formkörpern (12) aufweist und zur Verdichtung der Formkörperfüllung im Decklagenbereich ein in die Ausstülpung hineinragender Vorsprung (08) ausgebildet ist.

9. Polsterlagenanordnung nach Anspruch 8,
**dadurch gekennzeichnet,**
**dass** die Körperhülle (06) eine Öffnung aufweist.

10. Polsterlagenanordnung nach Anspruch 9,
**dadurch gekennzeichnet,**
**dass** die Öffnung als Bodenöffnung (14) in einer Bodenwandung (15) der taschenförmigen Ausstülpung (07) ausgebildet ist.

11. Polsterlagenanordnung nach einem der Ansprüche 8 bis 10,
**dadurch gekennzeichnet,**
**dass** die Basislage (03) und/oder die Decklage (02) aus einem thermoplastischen Material mit textiler Struktur gebildet sind.

12. Polsterlagenanordnung nach einem oder mehreren der Ansprüche 8 bis 11,
**dadurch gekennzeichnet,**
**dass** die Basislage (03) und/oder die Decklage (02) mit zumindest einer weiteren Decklage versehen sind.

13. Körperschutzpolster mit einer Polsterlagenanordnung (01) nach einem oder mehreren der Ansprüche 8 bis 12.

## Claims

1. A method for the production of a padded layer arrangement (01) for a padded body protection with a plurality of hollow bodies (05), which are formed in a layer composite between a thermoplastically deformable base layer (03) and a thermoplastically deformable cover layer (02), with the method steps:
a) forming a plurality of pocket-shaped protuberances (07) within the base layer, in particular by means of a vacuum and/or overpressure;
b) filling the pocket-shaped protuberances of the base layer with elastic shaped particles (12) for forming a shaped particle filling (11);
c) arranging the cover layer on the base layer in such a manner that, for forming hollow spaces, filling openings (16) of the pocket-shaped protuberances are covered by the cover layer;
d) applying heat to the cover layer, which is arranged on the base layer, and applying a vacuum (23) to the hollow spaces for forming projections (08) in the cover layer that extend into the protuberance while simultaneously compressing the shaped particle filling which is arranged in the hollow spaces, and forming a joining connection in a connection zone (09) that is formed at the opening edge (10) of the pocket-shaped protuberance between the base layer and the cover layer.

2. The method according to claim 1,
**characterised in that**
for forming the pocket-shaped protuberances (07), the base layer (03) is arranged on a mold plate (20) with pocket-shaped mold cavities (21) and subsequently, a vacuum (23) and/or, on the upper side of the heated base layer, overpressure is applied to the mold cavities that are covered by the base layer, which has been heated to a deforming temperature.

3. The method according to claim 2,
**characterised in that**
for forming the projections (08) of the cover layer (02) that extend into the protuberance (07), a vacuum (23) is applied to the hollow spaces, which are defined by the base layer (03) being covered by the cover layer, via a bottom opening (14) that is formed in a bottom wall (15) of the protuberance.

4. The method according to claim 3,
**characterised in that**
for forming the bottom opening (14), a perforation of the bottom wall (15), which rests against a mold cavity bottom (24), is effected by means of a tool that is inserted into a deaeration opening (22) of the mold plate.

5. The method according to one of the preceding claims,
**characterised in that**
during the vacuum application, the cover layer (02) is covered from the rear by a gas-tight layer.

6. The method according to one of the preceding claims,
**characterised in that**
the application of temperature to the cover layer (02) or to the layer that covers the cover layer is effected by means of a contact heater.

7. The method according to one of the claims 1 to 5,
**characterised in that**
the application of temperature to the cover layer (02) or to the gas-tight layer that covers the cover layer is effected by means of a radiation heater.

8. A padded layer arrangement (01) for a padded body protection with a plurality of hollow bodies (05), which are formed in a layer composite between a thermoplastically deformable base layer (03) and a thermoplastically deformable cover layer (02) and which have a body casing (06), and wherein the body casing (06) is formed by a base layer area (17) and by a cover layer area (18), and wherein the base layer and the cover layer are connected to each other via a joining connection in a connection zone (09) that is circumferential in the plane of the layer composite, and wherein said joining connection forms an upper edge of a pocket-shaped protuberance (07) of the base layer area, and wherein the body casing has a shaped particle filling (11) consisting of a plurality of elastic shaped particles (12) and, for compressing the shaped particle filling, in the cover layer area a projection (08) is formed that extends into the protuberance.

9. The padded layer arrangement according to claim 8,
**characterised in that**
the body casing (06) has an opening.

10. The padded layer arrangement according to claim 9,
**characterised in that**
the opening is formed as a bottom opening (14) in a bottom wall (15) of the pocket-shaped protuberance (07).

11. The padded layer arrangement according to one of the claims 8 to 10,
**characterised in that**
the base layer (03) and/or the cover layer (02) are formed from a thermoplastic material with a textile structure.

12. The padded layer arrangement according to one or more of the claims 8 to 11,
**characterised in that**
the base layer (03) and/or the cover layer (02) are provided with at least one further cover layer.

13. A padded body protection with a padded layer arrangement (01) according to one or more of the claims 8 to 12.

## Revendications

1. Procédé de fabrication d'un ensemble (01) de couches de rembourrage pour un rembourrage de protection corporelle, ayant une multiplicité de corps creux (05) qui sont réalisés en une combinaison sandwich entre une couche (03) de base étant déformable thermoplastiquement et une couche (02) de recouvrement étant déformable thermoplastiquement, ayant les étapes de procédé:
a) réaliser une multiplicité d'excroissances (07) en forme de poche dans la couche de base, en particulier moyennant un vide et/ou surpression;
b) remplir les excroissances en forme de poche de la couche de base avec des corps moulés (12) élastiques pour réaliser un garnissage (11) de corps moulés;
c) disposer la couche de recouvrement sur la couche de base, de telle manière que des ouvertures (16) de remplissage des excroissances en forme de poche soient recouvertes par la couche de recouvrement pour réaliser des corps creux;
d) alimenter de la chaleur à la couche de recouvrement étant disposée sur la couche de base et alimenter un vide (23) aux corps creux pour réaliser, dans la couche de recouvrement, des saillies (08) avançant dans l'excroissance, tout en comprimant le garnissage de corps moulés étant disposé dans les corps creux et réalisant un assemblage de jonction dans une zone (09) de liaison étant réalisée au bord (10) d'ouverture de l'excroissance en forme de poche entre la couche de base et la couche de recouvrement.

2. Procédé selon la revendication 1,
**caractérisé en ce que**
pour réaliser les excroissances (07) en forme de poche, la couche (03) de base est disposée sur une plaque-modèle (20) ayant des cavités (21) moulées en forme de poche et **en ce que** les cavités moulées étant recouvertes par la couche de base ayant été échauffée à la température de déformation sont ci-après alimentées en vide (23) et/ou en surpression en haut de la couche de base échauffée.

3. Procédé selon la revendication 2,
**caractérisé en ce que**
pour réaliser les saillies (08) de la couche (02) de recouvrement avançant dans l'excroissance (07), les corps creux étant définis par le recouvrement de la couche (03) de base avec la couche de recouvrement sont alimentés en vide (23) au travers une ouverture (14) de fond étant réalisée dans une paroi (15) de fond de l'excroissance.

4. Procédé selon la revendication 3,
**caractérisé en ce que**
pour réaliser l'ouverture (14) de fond, la paroi (15) de fond reposant contre un fond (24) d'une cavité moulée est perforée moyennant un outil étant introduit dans une ouverture (22) de ventilation de la plaque-modèle.

5. Procédé selon l'une quelconque des revendications précédentes,
**caractérisé en ce que**
la couche (02) de recouvrement est recouverte de l'arrière par une couche étanche au gaz lors de l'alimentation en vide.

6. Procédé selon l'une quelconque des revendications précédentes,
**caractérisé en ce que**
la couche (02) de recouvrement ou la couche recouvrant la couche de recouvrement est alimentée en chaleur moyennant un chauffage de contact.

7. Procédé selon l'une quelconque des revendications 1 à 5,
**caractérisé en ce que**
la couche (02) de recouvrement ou la couche étanche au gaz recouvrant la couche de recouvrement est alimentée en chaleur par l'entremise d'un chauffage à rayonnement.

8. Ensemble (01) de couches de rembourrage pour un rembourrage de protection corporelle, ayant une multiplicité de corps creux (05) qui sont réalisés en une combinaison sandwich entre une couche (03) de base étant déformable thermoplastiquement et une couche (02) de recouvrement étant déformable thermoplastiquement et qui présentent une enveloppe (06) de corps, et dans lequel l'enveloppe (06) de corps est formée par une région (17) de couche de base et par une région (18) de couche de recouvrement, et dans lequel la couche de base et la couche de recouvrement sont liées l'une à l'autre au travers un assemblage de jonction dans une zone (09) de liaison étant périphérique dans le plan de la combinaison sandwich, et dans lequel l'assemblage de jonction forme un bord supérieur d'une excroissance (07) en forme de poche de la région de la couche de base, et dans lequel l'enveloppe de corps présente un garnissage (11) de corps moulés consistant en une multiplicité de corps moulés (12) élastiques et une saillie (08) avançant dans l'excroissance est réalisée dans la région de la couche de recouvrement pour comprimer le garnissage de corps moulés.

9. Ensemble de couches de rembourrage selon la revendication 8,
**caractérisé en ce que**
l'enveloppe (06) de corps présente une ouverture.

10. Ensemble de couches de rembourrage selon la revendication 9,
**caractérisé en ce que**
l'ouverture est réalisée comme une ouverture (14) de fond dans une paroi (15) de fond de l'excroissance (07) en forme de poche.

11. Ensemble de couches de rembourrage selon l'une quelconque des revendications 8 à 10,
**caractérisé en ce que**
la couche (03) de base et/ou la couche (02) de recouvrement sont/est formée(s) d'un matériau thermoplastique ayant une texture textile.

12. Ensemble de couches de rembourrage selon une ou plusieurs des revendications 8 bis 11,
**caractérisé en ce que**
la couche (03) de base et/ou la couche (02) de recouvrement sont/est munie(s) avec au moins une autre couche de recouvrement.

13. Rembourrage de protection corporelle ayant un ensemble (01) de couches de rembourrage selon une ou plusieurs des revendications 8 à 12.
